# EUROPÄISCHE PATENTSCHRIFT

(11) **EP 3 855 137 B1**
(45) Veröffentlichungstag und Bekanntmachung des Hinweises auf die Patenterteilung: **10.07.2024**
(21) Anmeldenummer: 20153546.5
(22) Anmeldetag: 24.01.2020
(51) Int. Cl.: G01G 11/00

(54) **TRANSPORTBANDEINHEIT MIT KONFIGURATIONSÄNDERUNGSMECHANISMUS**
TRANSPORT BELT UNIT WITH CONFIGURATION CHANGE MECHANISM
UNITÉ DE BANDE TRANSPORTEUSE POURVUE DE MÉCANISME DE CHANGEMENT DE CONFIGURATION

(43) Veröffentlichungstag der Anmeldung: 28.07.2021
(73) Patentinhaber: Mettler-Toledo Garvens GmbH, 31180 Giesen (DE)
(72) Erfinder: Schwanitz, Florian, 31036 Eime (DE); Meyer, Mario, 30855 Langenhagen (DE)
(74) Vertreter: Mettler-Toledo

(56) Entgegenhaltungen:
- GB-A- 2 241 682
- US-A1- 2016 265 961

## Beschreibung

Die vorliegende Erfindung betrifft eine Transportbandeinheit für eine dynamische Kontrollwaage mit einem Konfigurationsänderungsmechanismus, insbesondere eine Transportbandeinheit mit einem Bandkörper, an welchem an den in Transportrichtung und entgegen der Transportrichtung sich befindenden Enden jeweils mindestens eine Förderrolle angeordnet ist und die Transportbandeinheit mit einem über den Bandkörper und die Rollen beweglich angeordneten Förderband versehen ist.

In der Herstellung von pharmazeutischen oder kosmetischen Produkten, Lebensmitteln, Getränken sowie in der Logistik-, chemischen, Automobilzuliefer-, und der metallverarbeitenden Industrie sind dynamische Kontrollwaagen ein Schlüsselelement der Qualitätssicherung. Sie verbessern nicht nur die Ausschöpfung der vorhandenen Ressourcen, sondern helfen auch nationale Verordnungen, Eichvorschriften und Industrienormen zu erfüllen. Ein effektives Kontrollwägesystem bietet Schutz gegen Produktfehler und senkt die Gesamtbetriebskosten.

Eine dynamische Kontrollwaage ist ein System, das Wägegüter verwiegt, während sie innerhalb einer Produktionslinie über die Waage geführt werden, die Wägegüter in vorgegebene Gewichtszonen klassiert und die Wägegüter entsprechend der Gewichtsklassierung sortiert oder ausschleust. Einsatzgebiete von Kontrollwaagen sind vielseitig und umfassen zum Beispiel:
- Prüfung auf Unter- bzw. Übergewicht von Produkten
- Einhaltung der gesetzlichen Bestimmungen für den Nettoinhalt von verpackten Gütern
- Reduzierung von Produktverschwendungen durch Verwendung der mittels der Kontrollwaage gewonnenen Gewichtswerte zur Einstellung der Füllmaschinen
- Klassierung von Produkten nach Gewicht
- Messung und Aufzeichnung der Leistung der Produktionsanlage bzw. -linie
- Stückzahl-Verifizierung anhand des Gewichts

Mit Kontrollwaagen werden 100% der Produkte einer Produktlinie gewogen. Somit werden dann auch die gesamten Produktionsdaten gesammelt für Produktzählung, Chargennachverfolgung oder für die Produktionsstatistik.

Ein Kontrollwägesystem besteht üblicherweise aus den Transportbandeinheiten Zuführbandeinheit, Wägebandeinheit, Abführbandeinheit mit Sortiereinrichtung und dem Wägeterminal mit Benutzerschnittstelle. Die zwischen Zu- und Abführbandeinheit gelegene Wägebandeinheit ist über einen Tragrahmen auf einer Wägezelle gelagert, welche das Gewicht des Produkts beim Überfahren der Wägebandeinheit dynamisch erfasst. Die zwei am häufigsten verwendeten Wägetechnologien für Kontrollwaagen sind Wägezellen mit Dehnungsmessstreifen (DMS) oder nach dem Prinzip der elektromagnetischen Kraftkompensation (EMFR) arbeitende Wägezellen. Nach ihrem Transport über die Wägebandeinheit werden die Produkte von einer der Wägebandeinheit nachgeschalteten Abführbandeinheit abtransportiert. Durch die dynamische Wägung werden fehlgewichtige Produkte erkannt und von einer Aussortiervorrichtung in der Regel quer zu dem in der Längsrichtung stattfindenden Transport der Produkte ausgestossen.

Bei einem der oben genannten Transportbandeinheiten kann es sich zum Beispiel um ein über eine dynamische Wägereinrichtung bewegtes Wägeförderband handeln. Häufig ist ein Förderband als sogenanntes Endlosband, das heisst ein in sich geschlossenes Band, ausgestaltet, das über mindestens zwei Förderrollen geführt ist, namentlich eine passive Laufrolle und eine Antriebsrolle, die mit einem Antrieb verbunden ist zum aktiven Antrieb des Förderbandes.

Herkömmliche Förderbänder sind als Endlosbänder ausgeführt, die eine Fingerverbindung aufweisen, welche untrennbar verschweisst oder verklebt wird. Ein solches Förderband wird z.B. in GB 917 260 A offenbart. Eine Problematik eines solcherart dauerhaft verbundenen Endlosbandes besteht darin, dass im Falle einer notwendigen Demontage, z.B. eines Förderbandwechsels zu Reparatur- oder Reinigungszwecken, die gesamte Förderanlage auseinandergebaut werden muss. Es besteht demnach das Bedürfnis ein Förderband zur Verfügung zu stellen, bei welchem sich eine Demontage einfach gestaltet.

Kontrollwägesysteme der bekannten Art prüfen automatisch eine Vielzahl von Produkten auf Konformität und trennen fehlerhafte Produkte aus, die nicht einer vorgegebenen Spezifikation oder Norm entsprechen. Kontrollwägesysteme werden in verschiedenen Umgebungen zur Durchführung von Sortiervorgängen eingesetzt. Typischerweise ist der Sortiervorgang ein integraler Bestandteil der Lebensmittelindustrie. Die Sortierung wird für Fleisch- und Fischprodukte, Milchprodukte wie Käse, landwirtschaftliche Produkte wie Nüsse usw. durchgeführt. Die empfindliche Natur der Produkte, die die Maschinen verarbeiten, erfordert eine häufige Reinigung der Komponenten wie Förderbänder, Auswurfbehälter, Auffangbehälter usw. sowie auch der gesamten Anlage, die in Kontakt mit dem zu verarbeitenden Produkt kommen können. Der Kreuzkontakt mit Allergenen könnte das Risiko einer Kontamination um ein Vielfaches erhöhen und damit ein schwerwiegendes Gesundheitsrisiko für den Endverbraucher des Produktes darstellen.

Das Hauptproblem bei der Reinigung der Kontrollwägesysteme ist die Schwierigkeit, einen optimalen Zugang zu Transportbändern, Ausstoßbehältern und Auffangbehältern zu erhalten. Dieses Problem untergräbt die Reinigungsbemühungen des Bedienpersonals erheblich und führt zu einem immer stärkeren Befall. Für die Durchführung der Reinigung wird das Transportband entspannt, bevor es vom Bandkörper des Kontrollwägesystems entfernt werden kann. Im Stand der Technik gibt es verschiedene Lösungen um an einer Transportbandeinheit einen einfachen Transportbandwechsel vorzunehmen oder in eine Position zu bringen, in welcher die Komponenten gereinigt werden können.

EP 1 101 715 A1 offenbart einen Bandkörper mit einem um zwei Rollen gespanntes Transportband, welches auf einem Tragrahmen aufliegt. Zwei seitlich am Tragrahmen angebrachte Klemmen sichern den Halt und die Positionierung des Bandkörpers auf dem Tragrahmen. Durch Lösen der Klammern kann der Bandkörper vollständig vom Tragrahmen entfernt werden und die einzelnen Teile können so mit verbessertem Zugang gereinigt werden. Nachteilig dabei ist, dass die Komponenten vollständig voneinander getrennt werden, was erstens mehr Personalaufwand und mehr Abstellflächen erfordert und zweitens das ausführende Personal über die korrekte Handhabung sowohl in der Demontage wie auch in der Wiedermontage geschult werden müssen.

In Figur 8 der JPH 066 099 Y2 ist ebenfalls eine Lösung präsentiert, wonach der Bandkörper von einem Tragrahmen entfernt werden kann. Es ist unschwer zu erkennen, dass hierdurch dieselben Nachteile vorliegen wie zu der im obigen Absatz beschrieben EP 1 101 715 A1.

Um die Reinigung einer Transportbandeinheit zu verbessern, d.h. an verdeckte Teile besser heranzukommen kann weiter das Transportband entfernt werden. In den Schriften JP 2010 037073 A, KR 2005 00 38 299 A und WO 06 094 417 A1 werden verschiedene Lösungen dafür vorgestellt. Ziel dieser Erfindung ist es aber nicht eine Lösung für das Entfernen eines Transportbandes an sich zu präsentieren, sondern um den Zugang zu verdeckten Teilen ohne Entfernen des Transportbandes zu verbessern.

Um diesen Zugang zu verdeckten Teilen ohne Entfernen des Transportbandes zu verbessern, zum Beispiel um das Reinigen und/oder Sterilisieren des Förderbandes und des Förderbandträgers zu verbessern, schlägt die GB 2 241 682 A vor den Förderbandträger schwenkbar an dem Maschinenrahmen anzubringen um von seiner Gebrauchsposition in eine Reinigungsposition bewegbar zu sein. Eine solche Anordnung kann zweckmässigerweise bereitgestellt werden, wenn der Förderbandträger am Maschinenrahmen mittels Platten befestigt ist, die an dem Förderbandträger befestigt und schwenkbar mit dem Maschinenrahmen an einem seitlich von dem Förderbandträger versetzten Punkt verbunden sind.

Um die Reinigungsmöglichkeit von Waagen mit mehreren Waagentischen zu verbessern schlägt die EP 3 066 035 A1 ein Gestell vor, an dem mindesten ein Waagentisch vorgesehen ist, der einen Rahmen aufweist, wobei der Rahmen des Wagentisches zumindest teilweise relativ zu dem Gestell klapp- und/oder drehbar vorgesehen ist, so dass der Rahmen von einer Gebrauchsin eine Reinigungsstellung und umgekehrt überführbar ist. Vorzugsweise weist der Rahmen einen relativ zum Gestell der Waage feststehenden Abschnitt und einen relativ zu dem Gestell der Waage klapp- und/oder drehbaren Abschnitt auf. Die beiden Abschnitte sind vorzugsweise über ein Dreh- und/oder Klapplager miteinander verbunden, so dass der dreh- und/oder klappbare Abschnitt relativ zu dem feststehenden Abschnitt bewegt werden kann. Dadurch wird der Transportgurt entspannt und kann von dem Rahmen des jeweiligen Waagentisches entfernt werden.

In Anbetracht der oben genannten Nachteile suchte die Anmelderin nach einer neuen Lösung, die es ermöglicht, die Transportbandeinheit so auszugestalten, dass dem Bedienungspersonal eine vereinfachtere Handhabung für die Reinigung der verschiedenen Komponenten des Kontrollwägesystems geboten wird, die mit dem zu verarbeitenden Produkt in Berührung kommen.

Die vorliegende Aufgabe wird gelöst durch eine Transportbandeinheit, für eine dynamische Kontrollwaage, aufweisend einen Tragrahmen, und einen mit dem Tragrahmen verbundenen und zur Beförderung eines Gegenstandes dienender Bandkörper mit an den in Transportrichtung und entgegen der Transportrichtung sich befindenden Enden des Bandkörper angeordneten Förderrollen und mit einem über die Förderrollen gespannten Transportband wobei das Transportband mittels eines Motors über eine der beiden Förderrollen angetrieben wird, wobei die Transportbandeinheit weiter einen zwischen Bandkörper und Tragrahmen wirkenden Konfigurationsänderungsmechanismus aufweist, welcher derart ausgestaltet ist, dass die Transportbandeinheit bei Betätigung des Konfigurationsänderungs-mechanismus zwischen einer nicht-betriebsbereiten Konfiguration und einer betriebsbereiten Konfiguration gewechselt wird. Weiter weist der Konfigurationsänderungsmechanismus mindestens ein Drehgelenkelement auf.

Erfindungsgemäss besteht ein Drehgelenkelement jeweils aus zwei Gelenkschenkeln, welche über eine Dünnstelle miteinander verbunden sind, wobei die Dünnstelle eine relative Drehbewegung der Gelenkschenkel zueinander um eine durch die Dünnstelle definierte Drehachse ermöglicht. Weiter ist das Drehgelenkelement mittels einem Gelenkschenkel am Bandkörper und mittels dem anderen Gelenkschenkel am Tragrahmen angebracht und ermöglicht so ein Verschwenken des Bandkörpers gegenüber dem Tragrahmen aus der betriebsbereiten Konfiguration in die nicht-betriebsbereite Konfiguration und zurück.

Vorteile der erfindungsgemässen Transportbandeinheit ergeben sich für den Anwender dadurch, dass der Bandkörper gegenüber dem Tragrahmen verschwenkt werden kann und so Zugang zu innenliegenden Teilen bietet ohne den Bandkörper vom Tragrahmen trennen zu müssen.

Als eine Transportbandeinheit wird im Sinne dieser Anmeldung sowohl die Zuführbandeinheit, die Wägebandeinheit als auch die Abführbandeinheit verstanden. Im Falle der Wägebandeinheit ist die Transportbandeinheit über eine Wägezelle am Grundrahmen der Anlage abgestützt, beim Zuführ- und der Abführbandeinheit ist eine direkte Montage am Grundrahmen vorgesehen.

In einer Weiterbildung kann das Drehgelenkelement derart am Bandkörper und am Tragrahmen angebracht sein, dass die definierte Drehachse parallel zur Transportrichtung ausgerichtet ist. Weiter kann die Drehachse oberhalb eines in Transportrichtung rechtsliegenden Seitenelements verlaufend liegen, oder oberhalb eines in Transportrichtung linksliegenden Seitenelements.

Ferner kann in einer weiteren Weiterbildung das Drehgelenkelement derart am Bandkörper und am Tragrahmen angebracht sein, dass die definierte Drehachse rechtwinklig zur Transportrichtung ausgerichtet ist. Weiter kann die Drehachse unterhalb des an dem in Transportrichtung sich befindenden Endes des Bandkörpers verlaufend liegen, oder unterhalb des an dem entgegen der Transportrichtung sich befindenden Endes des Bandkörpers.

In einer vorteilhaften Weiterbildung kann der Bandkörper in der betriebsbereiten Konfiguration am Tragrahmen auf gegenüber dem Drehgelenkelement angeordneten Auflageelemente aufliegen. Ferner kann die Transportbandeinheit weiter einen am Bandkörper festgelegten Spannhebel aufweisen, welcher von einer der betriebsbereiten Konfiguration entsprechenden unteren Einrastposition in eine der nicht-betriebsbereiten Konfiguration entsprechenden obere Einrastposition überführbar ist, so dass beim Überführen von einer Einrastposition in die andere Einrastposition der Bandkörper verschwenkt wird. Weiter können die untere Einrastposition und die obere Einrastposition in einer Matrize definiert sein, durch welche das dem Bandkörper entfernte Ende des Spannhebels hindurchreicht.

In einer weiteren vorteilhaften Weiterbildung kann die Matrize sich in einem unterhalb der Auflageelemente oder des Drehgelenkelements befindlichen Seitenelement des Tragrahmens befinden, oder die Matrize sich in einem unterhalb der Auflageelemente oder des Drehgelenkelement befindlichen die Seitenelemente verbindenden Querelement des Tragrahmens befinden.

In der betriebsbereiten Konfiguration der Transportbandeinheit kann der Spannhebel in der unteren Einrastposition unter Vorspannung einrastet sein und dabei den Bandkörper auf die Auflageelemente drücken. In der nicht-betriebsbereiten Konfiguration kann der Spannhebel in der oberen Einrastposition aufliegen und dabei den Bandkörper in der verschwenkten Position halten.

die Transportbandeinheit (100) eine Zuführbandeinheit oder eine Wägebandeinheit oder eine Abführbandeinheit ist

Einzelheiten der erfindungsgemässen Transportbandeinheit ergeben sich anhand der Beschreibung der in den Zeichnungen dargestellten Ausführungsbeispiele. Es zeigen:
- Fig. 1: Isometrische Darstellung der Transportbandeinheit in der betriebsbereiten Konfiguration;
- Fig. 2: Rückansicht der Transportbandeinheit aus Figur 1 in der betriebsbereiten Konfiguration;
- Fig. 3: Isometrische Darstellung eines Drehgelenkelements;
- Fig. 4: Frontansicht der Transportbandeinheit aus Figur 1 in der betriebsbereiten Konfiguration;
- Fig. 5: Seitenansicht der Transportbandeinheit in der betriebsbereiten Konfiguration mit Blick entgegen der Transportrichtung; und
- Fig. 6: Seitenansicht der Transportbandeinheit in der nicht-betriebsbereiten Konfiguration mit Blick entgegen der Transportrichtung.

Merkmale mit gleicher Funktion und ähnlicher Ausgestaltung sind in der folgenden Beschreibung mit denselben Bezugszeichen versehen.

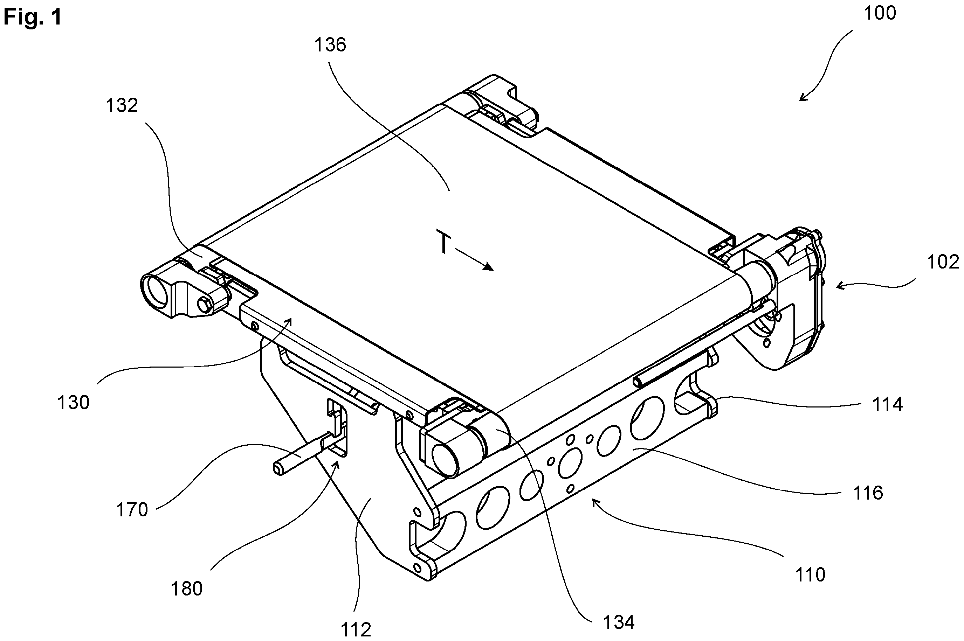

Figur 1 zeigt eine isometrische Darstellung einer Transportbandeinheit 100 in der betriebsbereiten Konfiguration. Die Transportrichtung T ist dabei von links nach rechts auf den Betrachter zugehend markiert. Die Transportbandeinheit 100 weist einen Tragrahmen 110 bestehend unter anderem aus zwei Seitenelementen 112, 114 und eines diese verbindendes Querelement 116. Über dieses Querelement 116 kann die Transportbandeinheit 100 über eine Wägezelle oder direkt an einem Grundrahmen eines Kontrollwägesystems, beispielsweise einer dynamischen Kontrollwaage, festgelegt werden. Die zweite grosse Baugruppe, der Bandkörper 130, ist mit dem Tragrahmen 110 verbundener und zur Beförderung eines Gegenstandes mit an den in Transportrichtung T und entgegen der Transportrichtung T sich befindenden Enden des Bandkörper 130angeordneten Rollen (132, 134). Über die Rollen (132,134) ist ein Transportband 136 gespannt, wobei das Transportband 136 mittels eines Motors 102 über eine der beiden Rollen 134 angetrieben wird. Durch das in Transportrichtung T rechtsliegende Seitenelement 112 reicht ein Spannhebel 170 durch eine Matrize 180 hindurch.

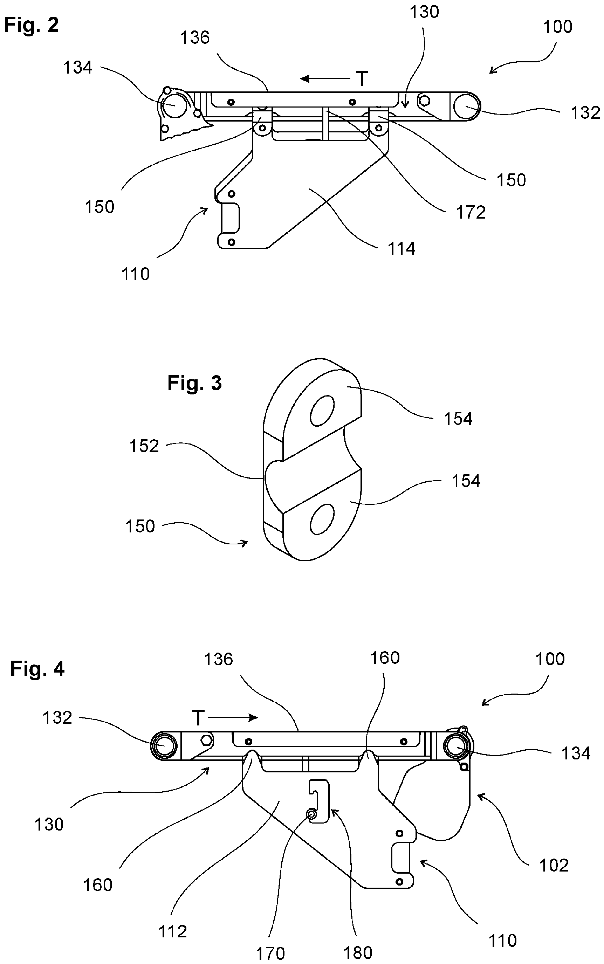

Figur 2, eine Rückansicht der Transportbandeinheit 100 aus Figur 1, zeigt wie der Tragrahmen 110 und der Bandkörper 130 mit einander verbunden sind. Zwei Drehgelenkelemente 150 sind einerseits mit dem linksseitig der Transportrichtung T liegenden Seitenelement 114 und dem Bandkörper 130 verbunden.

In Figur 3 ist ein solches Drehgelenkelement 150 separat vergrössert dargestellt. Es besteht aus zwei Gelenkschenkeln 154 welche über eine Dünnstelle 152 miteinander verbunden sind. Diese Dünnstelle 152 ermöglicht eine relative Drehbewegung der Gelenkschenkel 154 zueinander und somit im montierten Zustand eine Drehbewegung des Bandkörpers 130 gegenüber dem Tragrahmen 110. In diesem Ausführungsbeispiel wird das Drehgelenkelement 160 mittels Schrauben am Tragrahmen 110 und dem Bandkörper 130 befestigt. Der oben zu Figur 1 erwähnte Spannhebel 170 ist über die Verbindungsstelle 172 an dem Bandkörper 130 festgelegt. Wird der Spannhebel 170 nach oben bewegt so wird dadurch der Bandkörper 130 um die Dünnstelle 152 der Drehgelenkelemente 150 bewegt. Die beiden Dünnstellen 152 sind jeweils so angeordnet, dass deren jeweilige Drehachse, definiert durch die Dünnstelle 152, eine ein und dieselbe Drehachse für den Bandkörper 130 definieren.

In Figur 4 ist die Frontansicht der Transportbandeinheit 100 aus Figur 1 dargestellt. In der betriebsbereiten Konfiguration, in welcher ein Gegenstand über die Transportbandeinheit 100 transportiert werden kann, liegt der Bandkörper 130 auf zwei Auflageelementen 160 auf. Durch diese Auflageelemente 160 wird sichergestellt, dass nach einem Verschwenken des Bandkörper 130 dieser wieder waagrecht arretiert werden kann, respektive die betriebsbereite Konfiguration wiedergefunden wird.

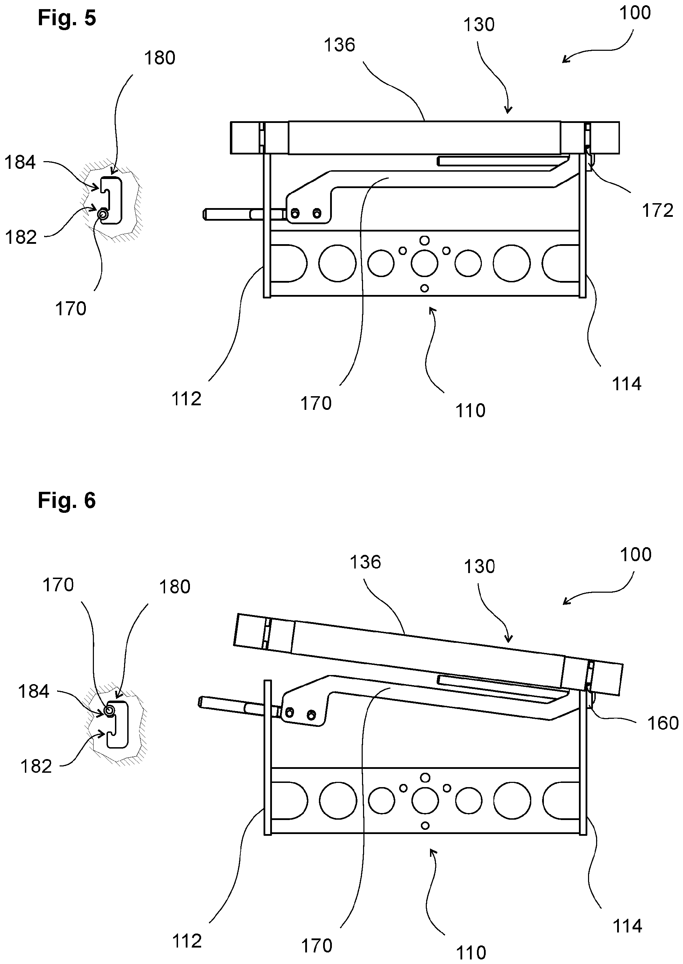

In der kombinierten Figur 5 ist die Transportbandeinheit 100 in der betriebsbereiten Konfiguration mit Blick entgegen der Transportrichtung und links davon ein Ausschnitt des Seitenelements 112 rund um die Matrize 180 gezeigt. Der Spannhebel 170 reicht durch die Matrize 180 im Seitenelement 112 hindurch und ist in der Matrize 180 in einer unteren Einrastposition 182 positioniert. Durch die Flexibilität des Spannhebels 170 und der Positionierung in der unteren Einrastposition 182 übt der Spannhebel 170 ein Drehmoment an der Verbindungsstelle 172 zum Bandkörper 130 aus, wodurch der Bandkörper 130 auf die Auflageelemente 160 gedrückt wird.

In der kombinierten Figur 6 ist die Transportbandeinheit 100 in der nicht-betriebsbereiten Konfiguration mit Blick entgegen der Transportrichtung und links davon ein Ausschnitt des Seitenelements 112 rund um die Matrize 180 gezeigt. Der Spannhebel 170 reicht durch die Matrize 180 im Seitenelement 112 hindurch und ist in der Matrize 180 in einer oberen Einrastposition 184 positioniert. Durch das Eigengewicht des Bandkörpers 130 und der Rückstellkraft des Drehgelenkelements 160 wird der Spannhebel 170 auf die obere Einrastposition 184 gedrückt. In dieser nicht-betriebsbereiten Konfiguration in Figur 6 ist zum einen der Zugang zu verdeckten Teilen verbessert, aber auch das Transportband 136 kann in dieser Position vereinfacht vom Bandkörper 130 entfernt werden.

Für den Wechsel zwischen der betriebsbereiten Konfiguration und der nicht-betriebsbereiten Konfiguration muss also der Spannhebel 170 von der unteren Einrastposition 182 in die obere Einrastposition 184 gewechselt werden. Dazu muss der Bediener lediglich den Spannhebel 170 von seiner Sicht aus erstmal nach rechts drücken, dann nach oben heben, und letztlich nach links bewegen.

Die oben beschriebene Erfindung umfasst auch verschiedene Abwandlungen, zum Beispiel kann die Matrize 180 selbstverständlich auch spiegelverkehrt ausgebildet sein oder eine Zwischenposition aufweisen. Die Verbindungsstelle 172 des Spannhebels 170 muss ebenfalls nicht zwingend über dem Seitenelement 114 an der Rückseite respektive an der in Transportrichtung T linksliegenden Seite am Bandkörper 130 festgelegt sein, sondern kann auch an der Vorderseite respektive an der in Transportrichtung T rechtsliegenden Seite, oberhalb des Seitenelements 112, angeordnet sein. Die erfinderische Lösung ist nicht gebunden an eine spezielle Transportbandeinheit, sondern kann ihre Anwendung sowohl an einer Zuführbandeinheit, einer Wägebandeinheit einer Abführbandeinheit oder an jeder auf einer Produkttransportstrecke befindlichen Transportbandeinheit finden.

### Liste der Bezugszeichen

- 100: Transportbandeinheit
- 102: Antriebseinheit
- 110: Tragrahmen
- 112: rechtes Seitenelement des Tragrahmens
- 114: linkes Seitenelement des Tragrahmens
- 130: Bandkörper
- 132, 134: Rollen
- 136: Transportband
- 140: Konfigurationsänderungsmechanismus
- 150: Drehgelenkelement
- 152: Dünnstelle
- 154: Gelenkschenkel
- 160: Auflageelement
- 170: Spannhebel
- 172: Verbindungsstelle
- 180: Matrize
- 182: untere Einrastposition
- 184: obere Einrastposition

- T: Transportrichtung

## Patentansprüche

1. Transportbandeinheit (100) für eine dynamische Kontrollwaage, aufweisend
einen Tragrahmen (110), und
einen mit dem Tragrahmen (110) verbundenen und zur Beförderung eines Gegenstandes dienender Bandkörper (130) mit
an den in Transportrichtung (T) und entgegen der Transportrichtung (T) sich befindenden Enden des Bandkörper (130) angeordneten Rollen (132, 134), und mit
einem über die Rollen (132, 134) gespannten Transportband (136), wobei das Transportband (136) mittels eines Motors (102) über eine der beiden Rollen (132, 134) angetrieben wird,
wobei die Transportbandeinheit (100) weiter einen zwischen Bandkörper (130) und Tragrahmen (110) wirkenden Konfigurationsänderungsmechanismus aufweist, welcher derart ausgestaltet ist, dass die Transportbandeinheit (100) bei Betätigung des Konfigurationsänderungsmechanismus zwischen einer nicht-betriebsbereiten Konfiguration und einer betriebsbereiten Konfiguration gewechselt wird, und
wobei der Konfigurationsänderungsmechanismus mindestens ein Drehgelenkelement (150) aufweist,
**dadurch gekennzeichnet, dass**
das Drehgelenkelement (150) aus zwei Gelenkschenkeln (154) besteht, welche über eine Dünnstelle (152) miteinander verbunden sind, wobei die Dünnstelle (152) eine relative Drehbewegung der Gelenkschenkel (154) zueinander um eine durch die Dünnstelle (152) definierte Drehachse ermöglicht, und dass
das Drehgelenkelement (150) mittels einem Gelenkschenkel (154) am Bandkörper (130) und mittels dem anderen Gelenkschenkel (154) am Tragrahmen (110) angebracht ist und dabei ein Verschwenken des Bandkörpers (130) gegenüber dem Tragrahmen (110) aus der betriebsbereiten Konfiguration in die nicht-betriebsbereite Konfiguration und zurück ermöglicht.

2. Transportbandeinheit (100) nach Anspruch 1,
**dadurch gekennzeichnet, dass**
das Drehgelenkelement (150) derart am Bandkörper (130) und am Tragrahmen (110) angebracht ist, dass die definierte Drehachse parallel zur Transportrichtung (T) ausgerichtet ist.

3. Transportbandeinheit (100) nach Anspruch 2,
**dadurch gekennzeichnet, dass**
die Drehachse oberhalb eines in Transportrichtung (T) rechtsliegenden Seitenelements (112) verlaufend liegt, oder
die Drehachse oberhalb eines in Transportrichtung (T) linksliegenden Seitenelements (114) verlaufend liegt.

4. Transportbandeinheit (100) nach Anspruch 1,
**dadurch gekennzeichnet, dass**
das Drehgelenkelement (150) derart am Bandkörper (130) und am Tragrahmen (110) angebracht ist, dass die definierte Drehachse rechtwinklig zur Transportrichtung (T) ausgerichtet ist.

5. Transportbandeinheit (100) nach Anspruch 4,
**dadurch gekennzeichnet, dass**
die Drehachse unterhalb des an dem in Transportrichtung (T) sich befindenden Endes des Bandkörpers (130) verlaufend liegt, oder
die Drehachse unterhalb des an dem entgegen der Transportrichtung (T) sich befindenden Endes des Bandkörpers (130) verlaufend liegt.

6. Transportbandeinheit (100) nach einem der Ansprüche 1 bis 5,
**dadurch gekennzeichnet, dass**
der Bandkörper (130) in der betriebsbereiten Konfiguration am Tragrahmen (110) auf gegenüber dem Drehgelenkelement (150) angeordneten Auflageelemente (160) aufliegt.

7. Transportbandeinheit (100) nach einem der Ansprüche 1 bis 6,
**dadurch gekennzeichnet, dass**
die Transportbandeinheit (100) weiter einen am Bandkörper (130) festgelegten Spannhebel (170) aufweist, welcher von einer der betriebsbereiten Konfiguration entsprechenden unteren Einrastposition (182) in eine der nicht-betriebsbereiten Konfiguration entsprechenden obere Einrastposition (184) überführbar ist, so dass beim Überführen von einer Einrastposition in die andere Einrastposition der Bandkörper (130) verschwenkt wird.

8. Transportbandeinheit (100) nach Anspruch 7,
**dadurch gekennzeichnet, dass**
die untere Einrastposition (182) und die obere Einrastposition (184) in einer Matrize (180) definiert sind, durch welche das dem Bandkörper (130) entfernte Ende des Spannhebels (170) hindurchreicht.

9. Transportbandeinheit (100) nach Anspruch 8,
**dadurch gekennzeichnet, dass**
die Matrize (180) sich in einem unterhalb der Auflageelemente (160) oder der Drehgelenkelemente (150) befindlichen Seitenelement (112, 114) des Tragrahmens (110) befindet, oder
die Matrize (180) sich in einem unterhalb der Auflageelemente (160) oder dem Drehgelenkelement (150) befindlichen die Seitenelemente (112, 114) verbindenden Querelement des Tragrahmens (110) befindet.

10. Transportbandeinheit (100) nach einem der Ansprüche 1 bis 9,
**dadurch gekennzeichnet, dass**
in der betriebsbereiten Konfiguration der Spannhebel (170) in der unteren Einrastposition (182) unter Vorspannung einrastet und dabei den Bandkörper (130) auf die Auflageelemente (160) drückt.

11. Transportbandeinheit (100) nach einem der Ansprüche 1 bis 10,
**dadurch gekennzeichnet, dass**
in der nicht-betriebsbereiten Konfiguration der Spannhebel (170) in der oberen Einrastposition (182) aufliegt und dabei den Bandkörper (130) in der verschwenkten Position hält.

12. Transportbandeinheit (100) nach einem der Ansprüche 1 bis 11,
**dadurch gekennzeichnet, dass** die Transportbandeinheit (100) eine Zuführbandeinheit oder eine Wägebandeinheit oder eine Abführbandeinheit ist.

## Claims

1. A transport belt unit (100) for a dynamic checkweigher, comprising
a support frame (110), and
a belt body (130) connected to the support frame (110) and adapted to transport an object, with
with rollers (132, 134) arranged at the ends of the belt body (130) located in the transport direction (T) and against the transport direction (T), and with
a transport belt (136) stretched over the rollers (132, 134), wherein the transport belt (136) is driven by means of a motor (102) via one of the two rollers (132, 134),
wherein the transport belt unit (100) further comprises a configuration change mechanism acting between the belt body (130) and the support frame (110), which is adapted so that the conveyor belt unit (100) is switched between a non-operational configuration and an operational configuration upon actuation of the configuration change mechanism, and wherein the configuration changing mechanism comprises at least one swivel joint element (150),
**characterized in that**
the swivel joint element (150) consists of two joint legs (154) which are connected to one another via a thin point (152), the thin point (152) enabling a relative rotational movement of the joint legs (154) with respect to one another about an axis of rotation defined by the thin point (152), and **in that**
the swivel joint element (150) is attached to the belt body (130) by means of one joint leg (154) and to the support frame (110) by means of the other joint leg (154), thereby enabling the belt body (130) to pivot relative to the support frame (110) from the operational configuration to the non-operational configuration and back.

2. Transport belt unit (100) according to claim 1,
**characterized in that**
the swivel joint element (150) is attached to the belt body (130) and to the support frame (110) such that the defined axis of rotation is aligned parallel to the transport direction (T).

3. Transport belt unit (100) according to claim 2,
**characterized in that**
the axis of rotation lies above a side element (112) on the right in the direction of transportation (T), or
the axis of rotation lies above a side element (114) on the left in the direction of transportation (T).

4. Transport belt unit (100) according to claim 1,
**characterized in that**
the swivel joint element (150) is attached to the belt body (130) and to the support frame (110) such that the defined axis of rotation is aligned at right angles to the transport direction (T).

5. Transport belt unit (100) according to claim 4,
**characterized in that**
the axis of rotation is located below the end of the belt body (130) located in the transport direction (T), or
the axis of rotation is located below the end of the belt body (130) against the transport direction (T).

6. Transport belt unit (100) according to any one of claims 1 to 5,
**characterized in that**
the belt body (130), in the operational configuration, rests on the support frame (110) on support elements (160) arranged opposite the swivel joint element (150).

7. Transport belt unit (100) according to any one of claims 1 to 6,
**characterized in that**
the transport belt unit (100) further comprises a tensioning lever (170) fixed to the belt body (130), which can be transferred from a lower engagement position (182) corresponding to the operational configuration to an upper engagement position (184) corresponding to the non-operational configuration, so that the belt body (130) is pivoted when transferring from one engagement position to the other engagement position.

8. Transport belt unit (100) according to claim 7,
**characterized in that**
the lower engagement position (182) and the upper engagement position (184) are defined in a die (180) through which the end of the tensioning lever (170) remote from the belt body (130) passes.

9. Transport belt unit (100) according to claim 8,
**characterized in that**
the die (180) is located in a side element (112, 114) of the supporting frame (110) located below the support elements (160) or the swivel joint elements (150), or
the die (180) is located in a transverse element of the support frame (110) which is located below the support elements (160) or the swivel joint element (150) and connects the side elements (112, 114).

10. Transport belt unit (100) according to any one of claims 1 to 9,
**characterized in that**
in the operational configuration, the tensioning lever (170) engages in the lower engagement position (182) under pre-tension and presses the belt body (130) onto the support elements (160).

11. Transport belt unit (100) according to any one of claims 1 to 10,
**characterized in that**
in the non-operational configuration, the tensioning lever (170) rests in the upper engagement position (182) and thereby holds the belt body (130) in the pivoted position.

12. Transport belt unit (100) according to any one of claims 1 to 11,
**characterized in that** the transport belt unit (100) is a feed belt unit or a weighing belt unit or a discharge belt unit.

## Revendications

1. Unité de bande transporteuse (100) pour une trieuse pondérale dynamique, présentant
un cadre de support (110), et
un corps de bande (130) relié au cadre de support (110) et utilisé pour transporter un objet comportant
des rouleaux (132, 134) disposés aux extrémités du corps de bande (130) situées dans le sens de transport (T) et de manière opposée au sens de transport (T), et comportant une bande transporteuse (136) tendue sur les rouleaux (132, 134), dans laquelle la bande transporteuse (136) est entraînée au moyen d'un moteur (102) par l'intermédiaire de l'un des deux rouleaux (132, 134),
dans laquelle l'unité de bande transporteuse (100) présente en outre un mécanisme de changement de configuration agissant entre le corps de bande (130) et le cadre de support (110), qui est conçu de sorte que l'unité de bande transporteuse (100) passe d'une configuration non opérationnelle à une configuration opérationnelle lorsque le mécanisme de changement de configuration est actionné, et
dans laquelle le mécanisme de changement de configuration comporte au moins un élément pivot (150),
**caractérisée en ce que**
l'élément pivot (150) est constitué de deux branches articulées (154) qui sont reliées l'une à l'autre par l'intermédiaire d'un point mince (152), dans laquelle le point mince (152) permet un mouvement de rotation relatif des branches articulées (154) l'une par rapport à l'autre autour d'un axe de rotation défini par le point mince (152), et **en ce que** l'élément pivot (150) est fixé au corps de bande (130) au moyen d'une branche articulée (154) et au cadre de support (110) au moyen de l'autre branche articulée (154) et permet ainsi un pivotement du corps de bande (130) par rapport au cadre de support (110) de la configuration opérationnelle à la configuration non opérationnelle et inversement.

2. Unité de bande transporteuse (100) selon la revendication 1,
**caractérisée en ce que**
l'élément pivot (150) est fixé au corps de bande (130) et au cadre de support (110) de sorte que l'axe de rotation défini est aligné parallèlement à la direction de transport (T).

3. Unité de bande transporteuse (100) selon la revendication 2,
**caractérisée en ce que**
l'axe de rotation s'étend au-dessus d'un élément latéral (112) situé à droite dans le sens de transport (T), ou
l'axe de rotation s'étend au-dessus d'un élément latéral (114) situé à gauche dans le sens de transport (T).

4. Unité de bande transporteuse (100) selon la revendication 1,
**caractérisée en ce que**
l'élément pivot (150) est fixé au corps de bande (130) et au cadre de support (110) de sorte que l'axe de rotation défini est orienté perpendiculairement à la direction de transport (T).

5. Unité de bande transporteuse (100) selon la revendication 4,
**caractérisée en ce que**
l'axe de rotation s'étend en-dessous de l'extrémité du corps de bande (130) située dans la direction de transport (T), ou
l'axe de rotation s'étend en-dessous de l'extrémité du corps de bande (130) située dans le sens contraire de la direction de transport (T).

6. Unité de bande transporteuse (100) selon l'une des revendications 1 à 5,
**caractérisée en ce que**
le corps de bande (130), en configuration opérationnelle, repose sur le cadre de support (110) sur des éléments de support (160) disposés en face de l'élément pivot (150).

7. Unité de bande transporteuse (100) selon l'une des revendications 1 à 6,
**caractérisée en ce que**
l'unité de bande transporteuse (100) comporte en outre un levier tendeur (170) fixé au corps de bande (130), qui peut être déplacé d'une position de verrouillage inférieure (182) correspondant à la configuration opérationnelle vers une position de verrouillage supérieure (184) correspondant à la configuration non opérationnelle, de sorte que, lors du déplacement, le corps de bande (130) pivote d'une position de verrouillage à l'autre position de verrouillage.

8. Unité de bande transporteuse (100) selon la revendication 7,
**caractérisée en ce que**
la position de verrouillage inférieure (182) et la position de verrouillage supérieure (184) sont définies dans une matrice (180), à travers laquelle s'étend l'extrémité du levier tendeur (170) éloignée du corps de bande (130).

9. Unité de bande transporteuse (100) selon la revendication 8,
**caractérisée en ce que**
la matrice (180) se trouve dans un élément latéral (112, 114) du cadre de support (110) situé en dessous des éléments de support (160) ou des éléments pivot (150), ou
la matrice (180) se trouve dans un élément transversal du cadre de support (110) reliant les éléments latéraux (112, 114) et situé en dessous des éléments de support (160) ou de l' élément pivot (150).

10. Unité de bande transporteuse (100) selon l'une des revendications 1 à 9,
**caractérisée en ce que**
dans la configuration opérationnelle, le levier tendeur (170) s'enclenche dans la position de verrouillage inférieure (182) sous précontrainte et presse ainsi le corps de bande (130) sur les éléments de support (160).

11. Unité de bande transporteuse (100) selon l'une des revendications 1 à 10, **caractérisée en ce que**
dans la configuration non opérationnelle, le levier tendeur (170) repose dans la position de verrouillage supérieure (182) et maintient ainsi le corps de bande (130) dans la position pivotée.

12. Unité de bande transporteuse (100) selon l'une des revendications 1 à 11, **caractérisée en ce que** l'unité de bande transporteuse (100) est une unité de bande d' alimentation ou une unité de bande de pesée ou une unité de bande de déchargement.
